## Europäisches Patentamt

(19) **European Patent Office**

**Office européen des brevets**

(11) Publication number: **0 231 158**
**B1**

(12) # EUROPEAN PATENT SPECIFICATION

(45) Date of publication of the patent specification:
18.07.90

(21) Application number: **87850005.7**

(22) Date of filing: **09.01.87**

(51) Int. Cl.⁵: **B01D 19/02**

(54) **Method for the destruction of foam.**

(30) Priority: **27.01.86 SE 8600337**

(43) Date of publication of application:
**05.08.87 Bulletin 87/32**

(45) Publication of the grant of the patent:
**18.07.90 Bulletin 90/29**

(84) Designated Contracting States:
**AT BE CH DE ES FR GB GR IT LI LU NL SE**

(56) References cited:
**SE-B- 439 251**

(73) Proprietor: **Chemical Dynamics Development
Aktiebolag, Box 247, S-532 23 Skara(SE)**

(72) Inventor: **Häggström, Margaretha, Siriusgatan 27,
S-223 57 Lund(SE)**
Inventor: **Tollemar, Ulf, S. Valigatan 4,
S-252 37 Helsingborg(SE)**

(74) Representative: **Wiklund, Erik et al, AWAPATENT AB
Box 5117, S-200 71 Malmö(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a method for the destruction of foam using a fibre matrix. Undesired foam formation is an old and well-known problem in various technical fields. Foaming occurs when a gas, usually air, is introduced into a liquid containing one or more substances producing a surface-active effect that reduces the free surface energy of the liquid. Undesired foam formation is encountered in, for example, papermaking, the production of glue, textile printing, the dehydrogenation of oils, polymerisation processes, such as for the production of polyvinyl chloride, in fermentation processes of various types, such as the making of beer, yeast and penicillin, in distillation processes, steam boiler working, in the synthesis of surface-active agents, etc.

It will thus be evident that undesired foam formation constitutes a problem in a variety of technical applications, and the problem can be very difficult to remedy. To counteract foaming, it has been proposed, inter alia, to superheat the foam above the liquid surface, to use mechanical stirrers of various types, or to introduce pulsating gas streams above the liquid. Another more frequently used technique of trying to reduce the problem of foam formation involves the use of so-called antifoaming compositions, frequently based on silicone, preventing the formation of foam or destroying foam that has already been formed. Although such chemical antifoaming compositions often are efficient in themselves, they entail additional operating costs, and furthermore it is, in many cases, unsuitable to add foreign chemicals, such as a antifoaming agents, to the foam-forming liquid. This is often the case in bioreactions, such as fermentation processes in which the antifoaming composition may adversely affect the microorganism (for example the ability to absorb oxygen) and process operations included in the bioprocess, or the desired product.

One example of prior art foam destruction technique is disclosed in GB-A 2,013,520 in which the foam is conducted through a porous filter in the form of a filter candle. The porous filter has a porosity of l5-85% and consists of, for example, foamed material, such as plastics, or of sintered material, such as glass, ceramic material or metal, or the filter may be in the form of a wound filter candle of fibres of, for example, cellulose, glass, asbestos, metal, or a filter paper folded in the shape of a star.

A further example is DE-A 2,309,365 which concerns a foam destruction method in which the foam is conducted through a packed bed. The packing may consist of different materials, such as fluorine-containing polymers, glass, or metals, and may have different shapes, such as Raschig rings, chips or slices.

To remedy the above problem, it is desirable to provide a method for efficiently breaking or destroying the foam encountered in foam-forming liquids, without the addition of foreign substances, such as antifoaming agents, to the liquid.

The present invention provides a solution to this problem, and the invention is based upon the discovery that certain fibre matrices are excellent foam destruction agents.

Before the invention is disclosed in detail, it should be mentioned that it is previously known in and per se to utilise fibre matrices in entirely different technical fields, such as in the filtration of gases and liquids in order to remove foreign particles. One example of this utilisation is the application EP-A 0 137 825 which corresponds to US-A 4 639 318.

These applications disclose a tubular filter consisting of two mineral wool fibre layers. The fibres of the inner layer are oriented essentially concentrically with respect to the filter axis, and the fibres of the outer layer are oriented essentially radially with respect to the filter axis. A liquid which is being filtered flows radially inwardly towards the axis of the tubular filter.

A further example is U.S.-A 3,210,229 which relates to a tubular filter comprising, for example, two concentric inner mineral wool layers with essentially radially oriented fibres, and an outer layer in which the fibres are oriented essentially transversely of the direction of flow. A liquid which is being filtered flows radially outwards from the interior of the filter.

Still another example is SE-A 7809355-6 corresponding to WO-A 8 000 542 which relates to a method for filtering gases or liquids by means of a fibrous material, such as mineral wool, and the fibrous material has a layered structure in which the fibres are essentially oriented in a main direction plane, and filtration is carried out such that the filtered medium leaves the filter in the main direction plane.

It will thus be evident that fibre matrices are generally known in and per se. On the other hand, it is not previously known to utilise fibre matrices for the destruction of foam particulary when the fibre matrix is designed in a specific manner.

The foam-destroying matrix utilised in the context of this invention is a three-dimensional fibre matrix, which means that the matrix is composed of fibres and has, in each of three planes perpendicular to one another, an extent which is at least 10 times the fibre diameter.

The matrix fibres generally have a diameter of about 1-500 μm, preferably about 1-100 μm, and most preferably about 1-20 μm. The fibres may be both hydrophilic and hydrophobic.

The foam-destroying fibre matrix is not bound to any specific fibrous material, but may, in principle, consist of any organic or inorganic fibrous material whatsoever, such as polymeric fibres, for example fibres of polyvinyl chloride, polyethylene, polypropylene, polyacrylonitrile, polyvinyl alcohol, cellulose, cellulose derivatives, metallic fibres, metal oxides, glass, ceramic material etc., either alone or in combination. The fibres may also have surface-coatings of various types, for example of fluoro polymers, such as Teflon®.

However, it is especially preferred in the context of this invention to utilise a fibre matrix of mineral wool, such as glass wool. Such fibre matrices possess all of the properties required of a matrix for the present invention, such as inertness, low resistance to gas and liquid flow, high dimensional stability etc., and can also be produced at low cost.

In order to facilitate understanding of the practical applicabilities, it may be mentioned that a normal structural insulation panel of glass wool has, for example, a density of about 23 kg/m³, and that its volume comprises about 1% glass and about 99% voids. The fibre matrix utilised for the present invention has a high porosity, preferably in the range 90-99%.

In order to increase the self-supporting capacity of the three-dimensional fibre matrix, the fibres may be bonded together at their crossing points by chemical or mechanical bonding. Chemical bonding may be accomplished for example by bonding the fibres together at the crossing points by means of a polymeric binder, for example of the phenolic resin type. The fibres may also bhe fused together at the crossing points by means of heat or solvent. One example of mechanical bonding is the needling of the fibrous material. A three-dimensional matrix bonded in this manner is essentially self-supporting.

The inventors have made the surprising discovery that foam is destroyed when introduced into a fibre matrix of the above-mentioned type. It is important to note that the present invention is not concerned with just any fibre matrix, but the fibres must be oriented and form planes which are parallel to a main axis of the fibre matrix.

Since it may be difficult to orient all of the fibres in their entire length in the said planes, the present invention requires the fibres to be mainly oriented in the planes, which implies that at least 60% of the total fibre length of the matrix deviates by at most 20° from the said planes. The deviation preferably is at most 20° in at least 70%, and most preferred at least 80% of the total fibre length of the matrix.

The characteristic features of the invention will appear from the appended claims.

Without binding the invention to any specific theory, it is assumed that strong capillary forces are formed in the said fibre planes, as a result of which the foam is destroyed upon introduction into the fibre matrix, the liquid in the foam coalescing and forming films which flow along the fibre planes. In order to establish an efficient flow of these liquid films along the fibre planes, the main axis (and thus the planes) must form an angle of about 20–90° to the horizontal plane. Preferably, this angle is and most preferably about 60-90°. While the liquid in the foam thus flows downwardly in the form of thin films along the fibre planes, the gas within the foam is released and can leave the fibre matrix, usually in an upward direction. However, it is not necessary that the released gas is discharged at the upper end of the fibre matrix, and the flow may also be such that the foam is introduced at the upper end of the fibre matrix, the liquid in the foam flowing downwardly as before in the form of films along the fibre planes, while the released gas is discharged laterally along the lateral surface of the fibre matrix. Consequently, the foam may be introduced into the fibre matrix either at the upper end thereof or at its lateral surface, and the released gas will then be discharged from the lateral surface of the fibre matrix or from its upper end. In all cases, the liquid in the foam will flow downwardly in the form of films along the fibre planes. It should be mentioned that, in the present invention, the foam is not introduced at the lower end of the fibre matrix. The reason for this is that the released and downwardly flowing liquid from the foam is collected at the lower end of the fibre matrix and gradually forms a liquid plug which acts as a barrier to upwardly flowing gas.

The invention is applicable to all kinds of foaming liquids that can be made to pass a fibre matrix of the above-mentioned type at the prevailing ambient conditions or at elevated pressure and/or temperature.

For better understanding, the invention will be described below with reference to the accompanying drawings in which

Figs. 1-3 illustrate a simple and basic embodiment of the invention, Figs. 2 and 3 being vertical sections along lines II-II and III-III, respectively, in Fig.1;

Figs. 4-5 illustrate an embodiment of the invention which is preferred at present, Fig. 5 being a vertical section along line V-V in Fig. 4; and

Fig. 6 illustrates a further embodiment of the invention in a vertical section along line VI-VI in Fig. 4.

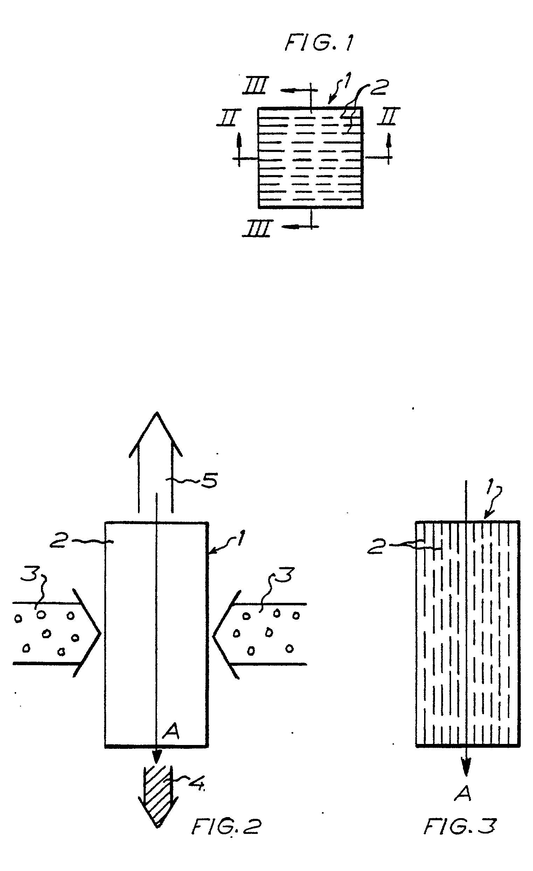

Referring to Figs. 1-3, Fig. 1 is a top plan view of a fibre matrix whose fibres are oriented in the manner required for the present invention. As indicated in Figs. 1 and 3, the fibres of the fibre matrix 1 are oriented in planes 2 which are parallel to the main axis A through the fibre matrix. As a result, the fibres form planes which, in Fig. 2, are parallel to the plane of the drawing. The fibre matrix illustrated in Figs. 1-3 is rectangular and of the simplest type conceivable. In carrying the invention into effect, the foam 3 which is to be destroyed (illustrated by means of arrows 3 with bubbles in Fig. 2) is supplied to the lateral surfaces of the fibre matrix, parallel to the fibre planes, such that the foam can penetrate into the fibre matrix 1 without being obstructed by transverse fibre planes. When the foam 3 penetrates into the fibre matrix 1, the foam is destroyed, as has been mentioned before, and the liquid within the foam coalesces and, because of strong capillary forces in the fibre planes, forms liquid films flowing along the fibre planes downwardly in the direction of the main axis A, and eventually the liquid is discharged in the form of a liquid flow 4 from the lower end of the fibre matrix. The gas released by the destruction of the foam flows upwardly and is discharged in the form of a gaseous stream 5 at the upper end of the fibre matrix.

It will be appreciated that the embodiment illustrated in Figs. 1-3 is shown highly schematically, and that it is advisable, in actual practice, to separate the supplied and discharged flows from one another by means of, for example, conduits and passageways as well as casings around the fibre matrix.

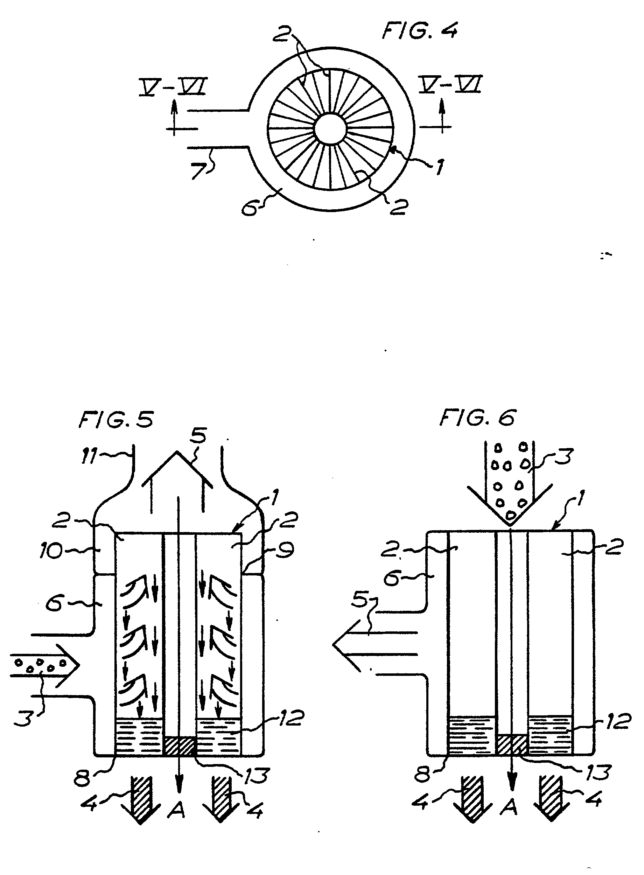

Figs. 4-5 illustrate a preferred embodiment of the invention, like details as in Figs. 1-3 being identified by like reference numerals.

In the presently preferred embodiment of the invention, the fibre matrix is cylindrical and, as is indicated in Figs. 4-5, the cylindrical matrix may be for example hollow. Such a cylindrical fibre matrix distinguishes from the rectangular fibre matrix shown in Figs. 1-3 in that the the fibre planes 2 are not parallel to one another, but are directed radially inwardly toward the centre of the fibre matrix. In the embodiment illustrated, the center axis of the cylinder coincides with the main axis A. When foam is supplied against the cylindrical surface area, a larger active introduction area is obtained than with a corresponding rectangular fibre matrix.

Fig. 4 which is top plan view, illustrates how the fibre matrix 1 is surrounded by a casing 6 with a supply opening 7 for foam to be processed. The foam is shown by means of an arrow 3 in Fig. 5. As may also be seen from Fig. 5, the casing 6 encloses the fibre matrix 1 and is in sealing engagement with the lower end 8 of the matrix and a distance below its upper end 9. Immediately adjacent the sealing of the casing 6 at 9, a new and optional casing portion 10 begins which surrounds the upper part of the fibre matrix and forms an exit 11 for escaping gas released from the foam after introduction thereof into the fibre matrix 1. Besides the gas 5, also the liquid 4 is released from the foam and, as has been mentioned before, coalesces and forms films flowing downwardly along the fibre planes in the direction of the main axis A and escaping from the fibre matrix at the lower end thereof, liquid 12 collecting in the lower part of the fibre matrix.

When the cylindrical matrix is provided with a central throughhole, as shown in Figs. 5 and 6, the throughhole is sealed at the lower end of the matrix by means of a plug 13.

As has been mentioned before, the gas released from the foam is discharged at the upper end of the fibre matrix, and in Fig. 5 the casing for the escaping gas 5 is shown to begin slightly below the upper end of the fibre matrix 1, thereby to provide an additional capacity for escaping gas.

The casing for the escaping gas may surround but the upper circular end of the fibre matrix, if this end provides a sufficient exit area, but in its preferred embodiment the casing for the escaping gas also surrounds part of the upper cylindrical surface area, as shown in Fig. 5.

According to a variant of the embodiment described above, the casing 6 may be omitted, and the fibre matrix may be provided only with the casing portion 10.

Fig. 6 illustrates a further embodiment of the invention which, in principle, distinguishes from the embodiment shown in Fig. 5 merely in that the foam is supplied to the upper end of the fibre matrix, as shown by the arrow 3, and in that the gas released by the foam destruction escapes from the lateral surface of the fibre matrix, as shown by the arrow 5. In the embodiment illustrated in Fig. 6, the casing 6 furthermore surrounds the entire cylindrical surface area of the fibre matrix, such that only the cylindrical upper end surface is available to the supplied foam 3. The liquid released by the foam destruction escapes, as before, at the lower end of the fibre matrix, as shown by the arrows 4.

The hollow cylindrical fibre matrix illustrated in Figs. 4-6 may be manufactured from a glass fibre panel in which the fibres are oriented perpendicular to the plane of the panel. Such a panel is built up of a conventional glass fibre panel in which the fibres are oriented parallel to the panel plane from which rods or strips having the desired length have been sawn. These rods or strips have been assembled and glued together, such that they form a panel in which the fibres are oriented at right angles to the panel plane. The glass fibre panel in which the fibres are oriented at right angles to the panel plane, is formed into a cylinder, and the facing panel edges are glued together. To make the cylinder stronger, a bonding layer of, for example, glass fibre fabric may be glued onto the container outer side. Such a bonding layer does not prevent the passage of gas or foam to any appreciable degree.

As examples of the applicability of the invention, which however are not to be regarded as restrictive examples, mention may be made of fermentation processes in conventional fermentation vessels of the reactor type. Such fermentation vessels are in the form of containers equipped with stirring means and means for discharging the gases formed and/or supplied. The microorganism required for the process is introduced into the vessel together with a liquid medium which usually contains a substrate for the microorganism. If the process is aerobic, air is introduced into and distributed within the liquid, as a result of which serious foaming difficulties frequently arise. According to the invention, these foaming difficulties can be counteracted by introducing, in connection with the discharge of supplied and/or formed gases, a fibre matrix of the above-mentioned type, for example in accordance with the embodiment illustrated in Figs. 4-5.

## Claims

1. A method for the destruction of foam, characterised in that the foam (3) is introduced into a fibre matrix (1) whose fibres are substantially oriented in planes (2), such that at least 60% of the total matrix fibre length deviates by at most 20° from said planes, said planes (2) being parallel to a main axis (A) which forms an angle of 20–90° to the horizontal plane and extends through the fibre matrix; that the gas and liquid of the foam are released and separated from each other and discharged from the matrix; and that the separated liquid flows downwardly in the direction of said main axis along the fibre planes.

2. A method as claimed in claim 1, characterised in that the foam (3) is introduced into the fibre matrix (1) from the sides thereof, and that the released gas (5) is discharged from the upper end of the fibre matrix, while the liquid (4) flows downwardly through the fibre matrix (1) and is discharged at the lower end thereof.

3. A method as claimed in claim 1, characterised in that the foam (3) is introduced into the fibre matrix (1) at the upper end thereof, and that the released gas (5) is discharged from the sides of the fibre matrix, while the liquid (4) flows downwardly through the fibre matrix (1) and is discharged at the lower end thereof.

4. A method as claimed in any one of the preceding claims, characterised in that the foam (3) is introduced into a cylindrical fibre matrix, the centre of which is the main axis (A).

**Patentansprüche**

1. Verfahren zur Zerstörung von Schaum, dadurch gekennzeichnet, dass der Schaum (3) in eine Fasermatrize (1) eingebracht wird, deren Fasern hauptsächlich in Ebenen (2) orientiert sind, derart, dass zumindest 60% der gesamten Matrizenfaserlänge um höchstens 20° von den genannten Ebenen abweichen, wobei die Ebenen (2) zu einer Hauptachse (A) parallel sind, die mit der Horizontalebene einen Winkel von 20–90° einschliesst und sich durch die Fasermatrize hindurcherstreckt, dass das Gas und die Flüssigkeit des Schaums freigemacht und voneinander getrennt werden sowie aus der Matrize ausgetragen werden, und dass die abgetrennte Flüssigkeit in der Richtung der Hauptachse längs der Faserebenen abwärts strömt.

2. Verfahren nach Anspruch 1, dadurch gekennzeichnet, dass der Schaum (3) in die Fasermatrize (1) von deren Seiten her eingebracht wird, und dass das freigemachte Gas (5) vom oberen Ende der Fasermatrize ausgetragen wird, während die Flüssigkeit (4) durch die Fasermatrize (1) abwärts strömt und an deren unterem Ende ausgetragen wird.

3. Verfahren nach Anspruch 1, dadurch gekennzeichnet, dass der Schaum (3) in die Fasermatrize (1) an deren oberem Ende eingebracht wird, und dass das freigemachte Gas (5) von den Seiten der Fasermatrize ausgetragen wird, während die Flüssigkeit (4) durch die Fasermatrize (1) abwärts strömt und an deren unterem Ende ausgetragen wird.

4. Verfahren nach einem der vorhergehenden Ansprüche, dadurch gekennzeichnet, dass der Schaum (3) in eine zylindrische Fasermatrize eingebracht wird, deren Mittelpunkt die Hauptachse (A) ist.

**Revendications**

1. Procédé de destruction de mousse, caractérisé en ce que la mousse (3) est introduite dans un groupe ordonné de fibres (1) dont les fibres sont pratiquement orientées dans des plans (2) de manière qu'au moins 60% de la longueur totale des fibres du groupe ne s'écartent pas de plus de 20° desdits plans, les plans (2) étant parallèles à un axe principal (A) qui fait un angle de 20 à 90° avec le plan horizontal et qui passe dans le groupe ordonné de fibres, en ce que le gaz et le liquide de la mousse sont libérés et séparés mutuellement puis évacués du groupe ordonné, et en ce que le liquide séparé descend suivant l'axe principal le long des plans des fibres.

2. Procédé selon la revendication 1, caractérisé en ce que la mousse (3) est introduite dans le groupe ordonné de fibres (1) par les côtés de celui-ci, et en ce que le gaz libéré (5) est évacué à l'extrémité supérieure du groupe ordonné de fibres, alors que le liquide (4) descend en s'écoulant dans le groupe ordonné de fibres (1) et est évacué à son extrémité inférieure.

3. Procédé selon la revendication 1, caractérisé en ce que la mousse (3) est introduite dans le groupe ordonné de fibres (1) à son extrémité supérieure, et en ce que le gaz libéré (5) est évacué par les côtés du groupe ordonné de fibres, alors que le liquide (4) s'écoule en descendant dans le groupe ordonné de fibres (1) et est évacué à son extrémité inférieure.

4. Procédé selon l'une quelconque des revendications précédentes, caractérisé en ce que la mousse (3) est introduite dans un groupe ordonné de fibres de forme cylindrique dont le centre constitue l'axe principal (A).

FIG. 1

FIG. 2

FIG. 3

*FIG. 4*

*FIG. 5*

*FIG. 6*